# EUROPEAN PATENT APPLICATION

(11) **EP 4 804 181 A1**
(43) Date of publication of application: **09.09.2026**
(21) Application number: 24920591.5
(22) Date of filing: 16.12.2024
(51) Int. Cl.: G10L 15/22, G10L 13/08, G10L 13/02, G10L 25/51, G10L 21/0208, G10L 15/26, G10L 13/00

(54) **ELECTRONIC DEVICE USING SYNTHESIZED SPEECH ACQUIRED FROM TEXT AND CONTROL METHOD THEREFOR**

(30) Priority: 25.01.2024 KR 20240011834
(71) Applicant: Samsung Electronics Co., Ltd., Suwon-si, Gyeonggi-do 16677 (KR)
(72) Inventor: YANG, Joonyoung, Suwon-si Gyeonggi-do 16677 (KR); ROH, Jaeyoung, Suwon-si Gyeonggi-do 16677 (KR); JUNG, Youngmoon, Suwon-si Gyeonggi-do 16677 (KR); HAN, Youngho, Suwon-si Gyeonggi-do 16677 (KR)
(74) Representative: Appleyard Lees IP LLP
(86) International application number: PCT/KR2024/020432
(87) International publication number: WO 2025/159341

(57) **Abstract**

An electronic apparatus is disclosed. The electronic apparatus includes memory storing at least one instruction and one or more processors connected to the memory and configured to control the electronic apparatus, and the one or more processors are configured to input text corresponding to a user input into a speech synthesis model to obtain a synthetic voice corresponding to the text, input the synthetic voice into a first embedding model to obtain a first embedding and store the first embedding in the memory, based on an uttered voice of a user being received, input the uttered voice into a second embedding model to obtain a second embedding, identify whether the uttered voice corresponds to the text based on a first similarity between the first embedding and the second embedding, and based on the uttered voice corresponding to the text, perform an operation corresponding to the text.

## Description

### [TECHNICAL FIELD]

The present invention relates to an electronic apparatus and a control method thereof, and more particularly, to an electronic apparatus using a synthetic voice obtained from text as a trigger word and a control method thereof.

### [Background Art]

Recently, voice recognition functions have been mounted in a plurality of electronic apparatuses. A user may easily execute a voice recognition function by uttering a designated trigger word.

When an electronic apparatus determines that a user has uttered a trigger word, the electronic apparatus may activate a voice recognition mode and identify an intent included in a user's voice command to perform a corresponding operation.

Meanwhile, as a plurality of home appliances having the same trigger word are provided within a home, when a user utters the trigger word intending to control a specific home appliance among the plurality of home appliances by voice, problems frequently occur in that a voice recognition mode of a home appliance that does not correspond to the user's intention (for example, a home appliance closest to the user) is activated, or a specific home appliance fails to recognize the trigger word due to surrounding noise.

Accordingly, there has been a demand for a method and technology in which a user registers different trigger words in each of the plurality of home appliances and smoothly activates a voice recognition mode of a specific home appliance that the user intends to control by voice among the plurality of home appliances.

### [Disclosure of Invention]

### [Solution to Problem]

An electronic apparatus according to an embodiment includes memory storing at least one instruction and one or more processors connected to the memory and configured to control the electronic apparatus, and the one or more processors are configured to input text corresponding to a user input into a speech synthesis model to obtain a synthetic voice corresponding to the text, input the synthetic voice into a first embedding model to obtain a first embedding and store the first embedding in the memory, based on an uttered voice of a user being received, input the uttered voice into a second embedding model to obtain a second embedding, identify whether the uttered voice corresponds to the text based on a first similarity between the first embedding and the second embedding, and based on the uttered voice corresponding to the text, perform an operation corresponding to the text.

A method of controlling an electronic apparatus according to an embodiment includes inputting text corresponding to a user input into a speech synthesis model to obtain a synthetic voice corresponding to the text, registering a first embedding obtained by inputting the synthetic voice into a first embedding model, based on an uttered voice of a user being received, inputting the uttered voice into a second embedding model to obtain a second embedding, identifying whether the uttered voice corresponds to the text based on a first similarity between the first embedding and the second embedding, and based on the uttered voice corresponding to the text, performing an operation corresponding to the text.

In a computer-readable recording medium including a program that executes a method of controlling an electronic apparatus according to an embodiment, the method includes inputting text corresponding to a user input into a speech synthesis model to obtain a synthetic voice corresponding to the text, registering a first embedding obtained by inputting the synthetic voice into a first embedding model, based on an uttered voice of a user being received, inputting the uttered voice into a second embedding model to obtain a second embedding, identifying whether the uttered voice corresponds to the text based on a first similarity between the first embedding and the second embedding, and based on the uttered voice corresponding to the text, performing an operation corresponding to the text.

### [Brief Description of Drawings]

FIG. 1 is a view provided to explain a trigger word for calling an electronic apparatus according to an embodiment;
FIG. 2 is a block diagram illustrating configuration of an electronic apparatus according to an embodiment;
FIG. 3 is a view provided to explain a synthetic voice corresponding to text according to an embodiment;
FIG. 4 is a view provided to explain an electronic apparatus that compares an uttered voice with a synthetic voice according to an embodiment;
FIG. 5 is a view provided to explain an electronic apparatus that trains a first embedding model according to an embodiment;
FIG. 6 is a view provided to explain a text embedding corresponding to text according to an embodiment;
FIG. 7 is a view provided to explain a speech enhancement model according to an embodiment; and
FIG. 8 is a flowchart provided to explain a method of controlling an electronic apparatus according to an embodiment.

### [Mode for Invention]

Hereinafter, the present disclosure will be described in detail with reference to the accompanying drawings.

General terms that are currently widely used are selected as the terms used in the embodiments of the disclosure in consideration of their functions in the disclosure, but may be changed based on the intention of those skilled in the art or a judicial precedent, the emergence of a new technique, or the like. In addition, in a specific case, terms arbitrarily chosen by an applicant may exist, in which case, the meanings of such terms will be described in detail in the corresponding descriptions of the disclosure. Thus, the terms used in the embodiments of the disclosure need to be defined on the basis of the meanings of the terms and the overall contents throughout the disclosure rather than simple names of the terms.

In the disclosure, the expressions "have", "may have", "include" or "may include" used herein indicate existence of corresponding features (for example, elements such as numeric values, functions, operations, or components), but do not exclude presence of additional features.

The expression "at least one of A or/and B" should be understood as indicating any one of "A", "B" and "both of A and B.".

The expressions "first", "second", "1st," "2nd," or the like, used in the disclosure may indicate various components regardless of sequence and/or importance of the components, will be used only in order to distinguish one component from the other components, and do not limit the corresponding components.

When it is described that an element (for example, a first element) is referred to as being "(operatively or communicatively) coupled with/to" or "connected to" another element (for example, a second element), it should be understood that it may be directly coupled with/to or connected to the other element, or they may be coupled with/to or connected to each other through an intervening element (for example, a third element).

The term of a singular number may include its plural number unless explicitly indicated otherwise in the context. It is to be understood that a term "include", "formed of", or the like used in the application specifies the presence of features, numerals, steps, operations, components, parts, or combinations thereof, mentioned in the specification, and does not preclude the presence or addition of one or more other features, numerals, steps, operations, components, parts, or combinations thereof.

In the disclosure, a "module" or a "unit" may perform at least one function or operation, and be implemented by hardware or software or be implemented by a combination of hardware and software. In addition, a plurality of "modules" or a plurality of "units" may be integrated into at least one module and be implemented by one or more processors (not shown) except for a 'module' or a 'unit' that needs to be implemented by specific hardware.

In the present specification, the term "user" may refer to a person who uses an electronic apparatus or a device that uses the electronic apparatus (for example, an artificial intelligence electronic apparatus).

Hereinafter, an embodiment of the present disclosure will be described in greater detail with reference to the accompanying drawings.

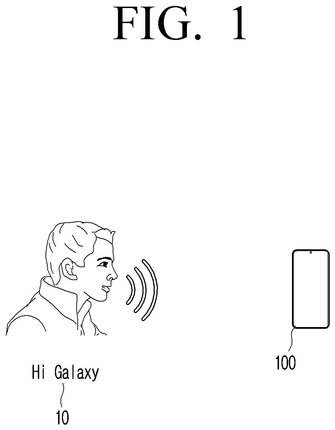

FIG. 1 is a view provided to explain a trigger word for calling an electronic apparatus according to an embodiment.

Referring to FIG. 1, an electronic apparatus 100 may be controlled according to a user's uttered voice. For example, the electronic apparatus 100 may include a microphone, and may receive an uttered voice of a user through the microphone. In addition, the electronic apparatus 100 may receive the user's uttered voice 10 from a remote control device including a microphone.

Thereafter, when the uttered voice 10 corresponds to a trigger word, the electronic apparatus 100 may enter a voice recognition mode.

According to an embodiment, the trigger word may be a preset word having a length of three syllables or four syllables for activating a voice recognition mode of the electronic apparatus 100 or calling the electronic apparatus 100.

According to an embodiment, the trigger word may also be referred to as a call word or a wakeup word. Hereinafter, for convenience of description, the term "trigger word" will be used collectively. The trigger word may be preset during a manufacturing stage of the electronic apparatus 100, may be added, changed, or deleted through a firmware update, or may be edited, such as added, changed, or deleted, according to a user setting.

Referring to FIG. 1, when the electronic apparatus 100 receives a user's uttered voice 10 "Hi Galaxy," and the received uttered voice 10 "Hi Galaxy" corresponds to the trigger word "Hi Galaxy," the electronic apparatus 100 may activate the voice recognition mode.

For example, the electronic apparatus 100 may store an embedding corresponding to the trigger word (hereinafter, a first embedding), and may compare the first embedding with an embedding corresponding to the user's uttered voice 10 (hereinafter, a second embedding). According to an embodiment, when a first similarity between the first embedding and the second embedding is equal to or greater than a threshold value, the electronic apparatus 100 may identify that the user's uttered voice 10 corresponds to the trigger word and activate the voice recognition mode.

For example, the electronic apparatus 100 may recognize a user's utterance to obtain a voice command, and activate a voice recognition mode for controlling the electronic apparatus 100 according to the voice command (for example, switching components within the electronic apparatus 100 for recognizing the user's utterance from a standby mode to a normal mode, or supplying power to components within the electronic apparatus 100 for recognizing the user's utterance).

In another example, when the first similarity between the first embedding and the second embedding is less than the threshold value, the electronic apparatus 100 may identify that the user's uttered voice 10 does not correspond to the trigger word and may not activate the voice recognition mode (for example, maintaining components within the electronic apparatus 100 for recognizing the user's utterance in the standby mode).

According to an embodiment, when trigger words corresponding to each of a plurality of electronic apparatuses 100 located in a space (for example, within a home) are identical, there may be a problem in that it is difficult for a user to activate only one electronic apparatus among the plurality of electronic apparatuses 100 by uttering the trigger word. For example, when the user utters the trigger word, a problem may occur in which the plurality of electronic apparatuses 100 are simultaneously activated according to the user's utterance.

In addition to the above situation, since a trigger word preset during the manufacturing stage does not reflect a user's preference or taste, there has been a demand for a method of setting a personalized or customized trigger word.

According to an embodiment, the electronic apparatus 100 may provide a method of setting a personalized trigger word, and in particular, the electronic apparatus 100 may provide a method of setting a personalized trigger word without reflecting speech characteristics of a user who sets the trigger word (or a user of the electronic apparatus 100) and a surrounding environment at a time of setting the trigger word.

For example, the electronic apparatus 100 may set a personalized trigger word based on text corresponding to a user input such that a unique frequency, intensity, pronunciation, prosody, speech rate, and the like of a user who sets the trigger word are not reflected when setting the trigger word.

For example, when a user's voice is received through a microphone and a word included in the voice is set as the trigger word, the electronic apparatus 100 may set the personalized trigger word based on text corresponding to the user input such that noise or interference occurring around the electronic apparatus 100 at a time of setting the trigger word (or at a time of receiving the user's voice) is not reflected in the trigger word setting.

For example, when text is input through an input device (for example, a keyboard, a mouse, a touch pad, or a microphone), the electronic apparatus 100 may obtain a synthetic voice (or synthetic speech) corresponding to the text. For example, the electronic apparatus 100 may input the text into a speech synthesis model (Text-to-Speech, TTS) to obtain a synthetic voice corresponding to the text.

According to an embodiment, the electronic apparatus 100 may set the text as a trigger word for calling the electronic apparatus 100, and may identify whether to activate the voice recognition mode using a first embedding corresponding to the synthetic voice.

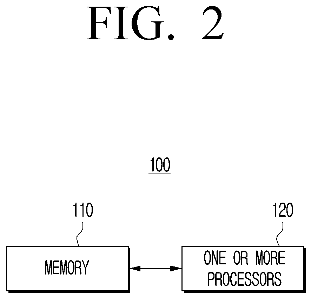

FIG. 2 is a block diagram illustrating configuration of an electronic apparatus according to an embodiment.

Referring to FIG. 2, the electronic apparatus 100 may include memory 110 and one or more processors 120.

The memory 110 may store at least one instruction or a computer program including instructions for controlling the electronic apparatus 100.

In the case of the memory 110 embedded in the electronic apparatus 100, the memory 110 may be implemented in the form of a volatile memory (for example, Dynamic Random Access Memory (DRAM), Static Random Access Memory (SRAM), or Synchronous Dynamic Random Access Memory (SDRAM)), a non-volatile memory (for example, One Time Programmable Read Only Memory (OTPROM), Programmable Read Only Memory (PROM), Erasable and Programmable Read Only Memory (EPROM), Electrically Erasable and Programmable Read Only Memory (EEPROM), mask ROM, flash ROM, flash memory such as NAND flash or NOR flash), a hard drive, or a Solid State Drive (SSD).

In the case of the memory 110 detachably attached to the electronic apparatus 100, the memory 110 may be implemented in the form of a memory card (for example, Compact Flash (CF), Secure Digital (SD), Micro Secure Digital (Micro-SD), Mini Secure Digital (Mini-SD), Extreme Digital (xD), Multi-Media Card (MMC)), an external memory connectable to a USB port (for example, a USB memory), a cartridge, or the like.

The one or more processors 120 may be implemented as a Digital Signal Processor (DSP), a microprocessor, or a Timing Controller (TCON). However, the one or more processors 120 are not limited thereto, and may include one or more of a Central Processing Unit (CPU), a Micro Controller Unit (MCU), a Micro Processing Unit (MPU), a controller, an Application Processor (AP), a Communication Processor (CP), an ARM processor, or an Artificial Intelligence (AI) processor, or may be defined by the corresponding term. In addition, the one or more processors 120 may be implemented as a System on Chip (SoC) in which a processing algorithm is embedded, a Large Scale Integration (LSI), or in the form of a Field Programmable Gate Array (FPGA). The one or more processors 120 may perform various functions by executing computer executable instructions stored in the memory.

The one or more processors 120 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors 120 may control one or any combination of the other components of the electronic apparatus, and may perform communication-related operations or data processing. The one or more processors 120 may execute one or more programs or instructions stored in the memory. For example, the one or more processors 120 may perform a method according to an embodiment by executing one or more instructions stored in the memory.

When a method according to an embodiment includes a plurality of operations, the plurality of operations may be performed by one processor or by a plurality of processors. For example, when a first operation, a second operation, and a third operation are performed by the method according to an embodiment, all of the first operation, the second operation, and the third operation may be performed by the first processor, or the first operation and the second operation may be performed by the first processor (e.g., a general-purpose processor) and the third operation may be performed by the second processor (e.g., an artificial intelligence-dedicated processor).

The one or more processors 120 may be implemented as a single core processor including a single core, or as one or more multicore processors including a plurality of cores (e.g., homogeneous multicore or heterogeneous multicore). When the one or more processors 120 are implemented as a multicore processor, each of the plurality of cores included in the multicore processor may include internal memory of the processor, such as cache memory and an on-chip memory, and a common cache shared by the plurality of cores may be included in the multicore processor. Each of the plurality of cores (or some of the plurality of cores) included in the multi-core processor may independently read and perform program instructions to implement the method according to an embodiment, or all (or some) of the plurality of cores may be coupled to read and perform program instructions to implement the method according to an embodiment.

When a method according to an embodiment includes a plurality of operations, the plurality of operations may be performed by one core of a plurality of cores included in a multi-core processor, or may be performed by a plurality of cores. For example, when a first operation, a second operation, and a third operation are performed by a method according to an embodiment, all of the first operation, the second operation, and the third operation may be performed by the first core included in the multi-core processor, or the first operation and the second operation may be performed by the first core included in the multi-core processor and the third operation may be performed by the second core included in the multi-core processor.

In the embodiments of the present disclosure, the processor may mean a system-on-chip (SoC) in which one or more processors and other electronic components are integrated, a single-core processor, a multi-core processor, or a core included in a single-core processor or multi-core processor and here, the core may be implemented as CPU, GPU, APU, MIC, DSP, NPU, hardware accelerator, or machine learning accelerator, etc., but the core is not limited to the embodiments of the present disclosure.

According to an embodiment, one or more processors 120 may input text corresponding to a user input into a speech synthesis model (for example, TTS) to obtain a synthetic voice corresponding to the text.

The one or more processors 120 may input the synthetic voice into a first embedding model to obtain a first embedding, and store the first embedding in the memory 110. When a user's uttered voice is received, the one or more processors 120 may input the uttered voice into a second embedding model to obtain a second embedding.

According to an embodiment, when the uttered voice corresponds to the text based on a first similarity between the first embedding and the second embedding, the one or more processors 120 may perform an operation corresponding to the text.

According to an embodiment, the operation corresponding to the text is not limited to an operation of entering a voice recognition mode, and may include various operations performable by the electronic apparatus 100 (for example, turning on/off a display, activating some of components included in the electronic apparatus 100, and the like).

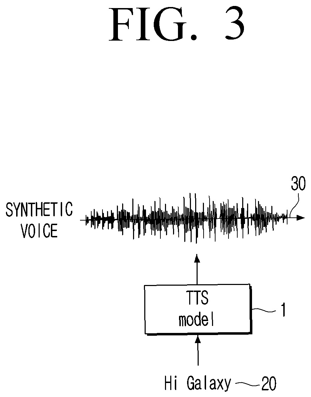

FIG. 3 is a view provided to explain a synthetic voice corresponding to text according to an embodiment.

Referring to FIG. 3, when a user inputs text 20 to be set as a trigger word using an input device or the like, the one or more processors 120 may input the text 20 into a speech synthesis model 1 to obtain a synthetic voice 30 corresponding to the text 20.

According to an embodiment, when the text 20 is input, the speech synthesis model 1 may divide the text 20 into units of words (or syllables) (for example, tokenization) to obtain tokens.

The speech synthesis model 1 may embed the tokens, and generate speech parameters for the embedded tokens. Here, the speech parameters may indicate utterance characteristics of a fixed (or preset) speaker (for example, frequency, intensity, pronunciation, prosody, speech rate, and the like).

According to an embodiment, the speech synthesis model 1 may convert the speech parameters into the synthetic voice 30 and output the synthetic voice 30.

According to an embodiment, the one or more processors 120 may obtain the synthetic voice 30 in which utterance characteristics of the fixed (or preset) speaker, rather than utterance characteristics of a user of the electronic apparatus 100 (or a user who intends to set a trigger word), are reflected.

According to an embodiment, the one or more processors 120 may input the synthetic voice 30 into the first embedding model to obtain a first embedding, and store (or register) the first embedding in the memory 110.

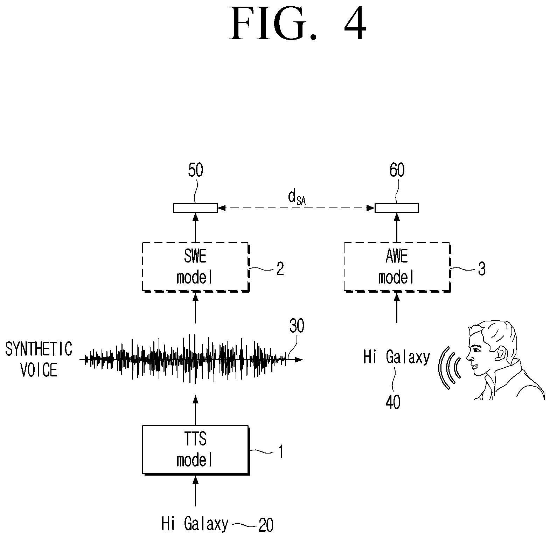

FIG. 4 is a view provided to explain an electronic apparatus that compares an uttered voice with a synthetic voice according to an embodiment.

Referring to FIG. 4, the one or more processors 120 may input the synthetic voice 30 into a first embedding model 2 to obtain a first embedding 50. According to an embodiment, the first embedding 50 may also be referred to as a synthetic voice embedding or a synthetic voice embedding vector, but for convenience of description, the first embedding 50 will be used collectively.

According to an embodiment, the one or more processors 120 may input the synthetic voice 30 into the first embedding model 2, and the first embedding model 2 may output the first embedding 50 representing the synthetic voice 30 in a vector form.

The first embedding model 2 may also be referred to as a Synthetic Word Embedding (SWE) model, but for convenience of description, the first embedding model 2 will be used collectively.

According to an embodiment, after storing (or registering) the first embedding 50, when a user's uttered voice 40 is received, the one or more processors 120 may input the uttered voice 40 into a second embedding model 3 to obtain a second embedding 60. According to an embodiment, the second embedding 60 may also be referred to as an uttered-voice embedding or an uttered-voice embedding vector, but for convenience of description, the second embedding 60 will be used collectively.

The second embedding model 3 may also be referred to as an Acoustic Word Embedding (AWE) model, but for convenience of description, the second embedding model 3 will be used collectively.

According to an embodiment, the one or more processors 120 may input the uttered voice 40 into the second embedding model 3, and the second embedding model 3 may output the second embedding 60 representing the uttered voice 40 in a vector form.

According to an embodiment, the one or more processors 120 may identify a similarity (or similarity degree) between the first embedding 50 and the second embedding 60 based on a distance dSA between the first embedding 50 and the second embedding 60.

For example, the one or more processors 120 may identify that the first embedding 50 and the second embedding 60 are not similar as the distance dSA between the first embedding 50 and the second embedding 60 becomes longer, and identify that the first embedding 50 and the second embedding 60 are similar as the distance dSA becomes shorter.

When the first similarity between the first embedding 50 and the second embedding 60 is equal to or greater than a threshold value (for example, when the distance dSA between the first embedding 50 and the second embedding 60 is less than a threshold distance), one or more processors 120 may identify that the user's uttered voice 40 corresponds to the text 20.

According to an embodiment, when the user's uttered voice 40 corresponds to the text 20, the one or more processors 120 may perform an operation corresponding to the text 20.

For example, the text 20 may be a customized trigger word, and when the first similarity between the first embedding 50 and the second embedding 60 is equal to or greater than the threshold value, the one or more processors 120 may identify that the user has uttered the trigger word, and may enter a voice recognition mode.

According to an embodiment, the one or more processors 120 may input the text 20 into the speech synthesis model 1 to obtain the synthetic voice 30 and characteristic information related to the synthetic voice 30. Here, the characteristic information related to the synthetic voice 30 may include at least one of length (for example, duration) information of the synthetic voice 30 or prosody information.

According to an embodiment, the one or more processors 120 may input the synthetic voice 30 and the characteristic information related to the synthetic voice 30 into the first embedding model 2 to obtain the first embedding 50.

For example, since the trigger word is a preset word having a length of three syllables or four syllables, in order to more accurately identify whether the user's uttered voice 40 corresponds to the text 20, the one or more processors 120 may obtain the first embedding 50 by inputting the synthetic voice 30 and the characteristic information related to the synthetic voice 30 into the first embedding model 2, and may compare the first embedding 50 and the second embedding 60.

According to an embodiment, since the characteristic information related to the synthetic voice 30 is an intermediate output, rather than a final output (for example, the synthetic voice 30) of the speech synthesis model 1, the one or more processors 120 may input the synthetic voice 30 and the characteristic information, which is an intermediate output of the speech synthesis model 1, into the first embedding model 2 to more accurately compare the synthetic voice 30 and the uttered voice 40.

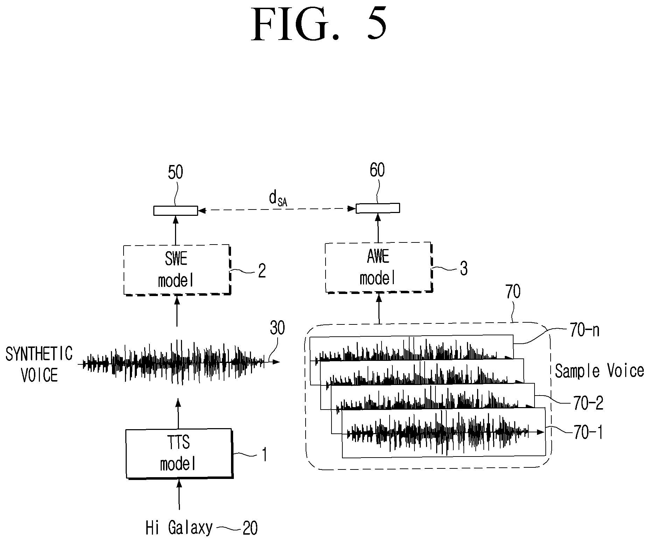

FIG. 5 is a view provided to explain an electronic apparatus that trains a first embedding model according to an embodiment.

Referring to FIG. 5, a plurality of sample uttered voices 70-1, ..., 70-n may include a plurality of first sample uttered voices corresponding to the text 20 and a plurality of second sample uttered voices not corresponding to the text 20.

For example, the one or more processors 120 may input the plurality of first sample uttered voices into the second embedding model 3 to obtain a plurality of first sample embeddings.

The one or more processors 120 may input the plurality of second sample uttered voices into the second embedding model 3 to obtain a plurality of second sample embeddings.

According to an embodiment, the one or more processors 120 may train the first embedding model 2 such that similarities between each of the plurality of first sample embeddings and the first embedding 50 are equal to or greater than a threshold value (or such that distances d_{SA} between each of the plurality of first sample embeddings and the first embedding 50 become shorter).

In addition, the one or more processors 120 may train the first embedding model 2 such that similarities between each of the plurality of second sample embeddings and the first embedding 50 are less than the threshold value (or such that distances d_{SA} between each of the plurality of second sample embeddings and the first embedding 50 become longer).

An artificial intelligence-related function according to the present disclosure is operated through the one or more processors 120 and the memory 110 of the electronic apparatus 100.

The one or more processors 120 may include at least one of a Central Processing Unit (CPU), a Graphic Processing Unit (GPU), or a Neural Processing Unit (NPU), but are not limited to the foregoing examples.

A CPU is a general-purpose processor capable of performing artificial intelligence operations as well as general operations, and may efficiently execute a complex program through a multi-layer cache structure. The CPU may be advantageous for a serial processing method that enables an organic linkage between a previous calculation result and a next calculation result through sequential calculations. A general-purpose processor is not limited to the foregoing example except a case explicitly described as the CPU.

A GPU is a processor for a large amount of computation such as floating-point operations used for graphic processing, and may perform large-scale operations in parallel by integrating a large number of cores. In particular, the GPU may be advantageous for parallel processing such as convolution operations compared to the CPU. In addition, the GPU may be used as a co-processor for complementing functions of the CPU. A processor for a large amount of computation is not limited to the foregoing example except a case explicitly described as the GPU.

An NPU is a processor specialized for artificial intelligence operations using an artificial neural network, and may implement each layer constituting the artificial neural network in hardware (for example, silicon). In this case, since the NPU is specially designed according to required specifications of a manufacturer, the degree of freedom may be lower than that of the CPU or the GPU, but artificial intelligence operations required by the manufacturer may be efficiently processed. Meanwhile, as a processor specialized for artificial intelligence operations, the NPU may be implemented in various forms such as a Tensor Processing Unit (TPU), an Intelligence Processing Unit (IPU), and a Vision Processing Unit (VPU). An artificial intelligence processor is not limited to the foregoing example except in a case explicitly described as the NPU.

In addition, the one or more processors 120 may be implemented as a System on Chip (SoC). In this case, the SoC may further include, in addition to one or more processors, a memory, and a network interface such as a bus for data communication between the processor and the memory.

When a plurality of processors are included in the SoC included in the electronic apparatus 100, the electronic apparatus 100 may perform artificial intelligence-related operations (for example, operations related to learning or inference of an artificial intelligence model) using some processors among the plurality of processors. For example, the electronic apparatus 100 may perform artificial intelligence-related operations using at least one of a GPU, an NPU, a VPU, a TPU, or a hardware accelerator specialized for artificial intelligence operations such as convolution operations and matrix multiplication operations among the plurality of processors. However, this is merely an embodiment, and the artificial intelligence-related operations may also be processed using a general-purpose processor such as a CPU.

In addition, the electronic apparatus 100 may perform operations for artificial intelligence-related functions using multi-cores (for example, a dual core or a quad core) included in one processor. In particular, the electronic apparatus 100 may perform artificial intelligence operations such as convolution operations and matrix multiplication operations in parallel using the multi-cores included in the processor.

One or more processors control processing of input data according to predefined operation rules or an artificial intelligence model stored in the memory 110. The predefined operation rules or the artificial intelligence model is characterized in that it is generated through learning.

Here, being generated through learning means that desired predefined operation rules or an artificial intelligence model are generated by applying a learning algorithm to a plurality of learning data. Such learning may be performed in the device itself in which the artificial intelligence according to the present disclosure is performed, or may be performed through a separate server/system.

The artificial intelligence model may be configured with a plurality of neural network layers. At least one layer has at least one weight value, and performs an operation of the layer through an operation result of a previous layer and at least one defined operation. Examples of the neural network include a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), a Generative Adversarial Network (GAN), a NeRF, deep Q-networks (Deep Q-Networks), and a Transformer, and the neural network in the present disclosure is not limited to the foregoing examples except in a case explicitly described.

A learning algorithm is a method of training a predetermined target device (for example, a robot) using a plurality of learning data so that the predetermined target device may make a decision or prediction by itself. Examples of the learning algorithm include supervised learning, unsupervised learning, semi-supervised learning, and reinforcement learning, and the learning algorithm in the present disclosure is not limited to the foregoing examples except a case explicitly described.

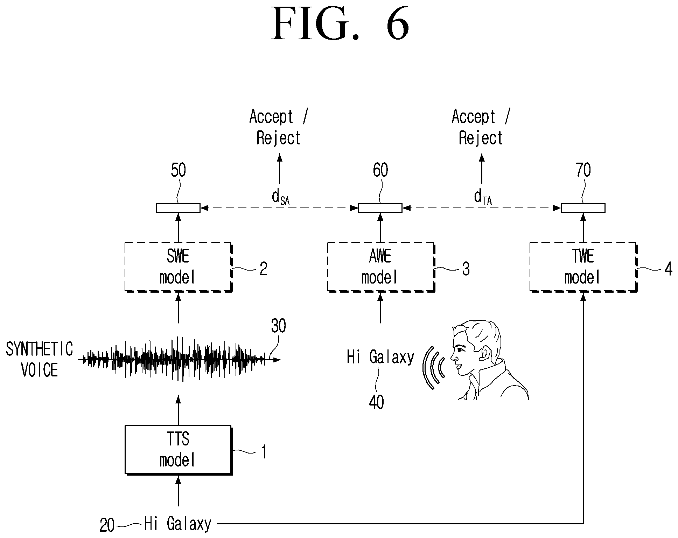

FIG. 6 is a view provided to explain a text embedding corresponding to text according to an embodiment.

Referring to FIG. 6, the one or more processors 120 may input the text 20 into a third embedding model 4 to obtain a third embedding 80.

According to an embodiment, the third embedding model 4 may also be referred to as a Text Word Embedding (TWE) model.

For example, when the text 20 is input, the third embedding model 4 may map the text 20 to a high-dimensional vector space to output a third embedding (or a third embedding vector) 80 corresponding to the text 20.

According to an embodiment, the one or more processors 120 may compare the first embedding 50 and the second embedding 60 to identify the first similarity between the first embedding 50 and the second embedding 60.

In addition, the one or more processors 120 may compare the second embedding 60 and the third embedding 80 to identify a second similarity between the second embedding 60 and the third embedding 80. For example, the one or more processors 120 may identify a distance d_{TA} between the second embedding 60 and the third embedding 80.

According to an embodiment, when at least one of the first similarity or the second similarity is equal to or greater than a threshold value, the one or more processors 120 may identify that the uttered voice 40 corresponds to the text 20.

According to an embodiment, the one or more processors 120 may obtain the second embedding 60 by inputting the uttered voice 40 into the second embedding model 3, and obtain the third embedding 80 by inputting the text 20 into the third embedding model 4. When the second similarity between the second embedding 60 and the third embedding 80 is equal to or greater than the threshold value, the one or more processors 120 may identify that the user has uttered the trigger word and may enter a voice recognition mode.

For example, even when the first similarity between the first embedding 50 and the second embedding 60 is less than the threshold value, when the second similarity between the second embedding 60 and the third embedding 80 is equal to or greater than the threshold value, the one or more processors 120 may identify that the user has uttered the trigger word and may enter the voice recognition mode.

The present disclosure is not limited thereto, and the one or more processors 120 may identify that the uttered voice 40 corresponds to the text 20 when each of the first similarity and the second similarity is equal to or greater than the threshold value. For example, when at least one of the first similarity or the second similarity is less than the threshold value, the one or more processors 120 may identify that the user has not uttered the trigger word and may not enter the voice recognition mode.

As shown in FIG. 5, the plurality of sample uttered voices 70-1, ..., 70-n may include the plurality of first sample uttered voices corresponding to the text 20 and the plurality of second sample uttered voices not corresponding to the text 20.

According to an embodiment, the one or more processors 120 may obtain the plurality of first sample embeddings by inputting the plurality of first sample uttered voices into the second embedding model 3, and obtain the plurality of second sample embeddings by inputting the plurality of second sample uttered voices into the second embedding model 3.

According to an embodiment, the one or more processors 120 may train the third embedding model 4 such that similarities between each of the plurality of first sample embeddings and the third embedding 80 are equal to or greater than the threshold value (or such that distances d_{TA} between each of the plurality of first sample embeddings and the third embedding 80 become shorter).

In addition, the one or more processors 120 may train the third embedding model 4 such that similarities between each of the plurality of second sample embeddings and the third embedding 80 are less than the threshold value (or such that distances d_{TA} between each of the plurality of second sample embeddings and the third embedding 80 become longer).

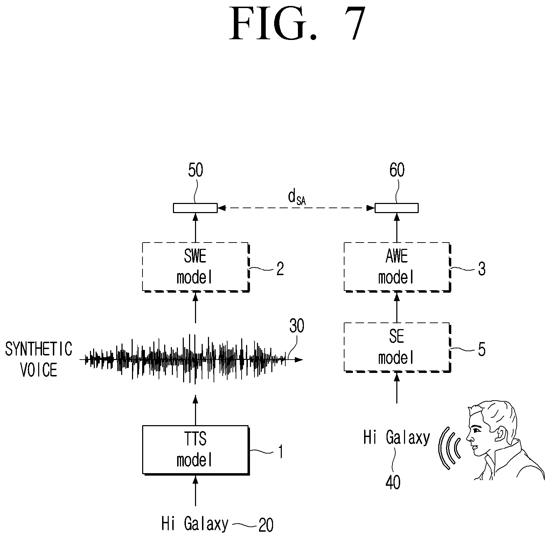

FIG. 7 is a view provided to explain a speech enhancement model according to an embodiment.

According to an embodiment, the one or more processors 120 may input the uttered voice 40 into the second embedding model 3 after applying the uttered voice 40 to a speech enhancement (SE) model 5.

For example, the one or more processors 120 may apply the uttered voice 40 to the speech enhancement model 5 to remove noise included in the uttered voice 40, amplify the uttered voice 40, and then input the uttered voice 40 into the second embedding model 3 to obtain the second embedding 60.

For example, in order to more accurately compare the synthetic voice 30 and the uttered voice 40, when the uttered voice 40 is obtained by receiving a user's voice through a microphone, the speech enhancement model 5 may remove noise or interference occurring around the electronic apparatus 100 (or the microphone) at a time of receiving the user's voice and included in the uttered voice 40, and may amplify the uttered voice 40 from which the noise has been removed to be equal to or greater than a preset level (for example, SPL, loudness, dB, and the like).

For example, a process of removing noise and interference of the uttered voice 40 and amplifying the uttered voice 40 by using the speech enhancement (SE) model 5 may also be referred to as a preprocessing process.

According to an embodiment, the one or more processors 120 may train the speech enhancement model based on a plurality of third sample uttered voices and transcript information corresponding to each of the plurality of third sample uttered voices.

According to an embodiment, when the text 20 is changed, the one or more processors 120 may input changed text 20' into the speech synthesis model 1 to obtain a new synthetic voice 30' corresponding to the changed text 20'.

The one or more processors 120 may obtain and store (or register) a new first embedding 50' by inputting the new synthetic voice 30' into the first embedding model 2.

According to various embodiments, it is possible to provide an electronic apparatus in which a trigger word is easily changeable by generating the synthetic voice 30 in which utterance characteristics of a fixed (or preset) speaker are reflected without reflecting (that is, while minimizing variation factors) utterance characteristics of a user who sets a trigger word (or a user of the electronic apparatus 100) and a surrounding environment at a time of setting the trigger word.

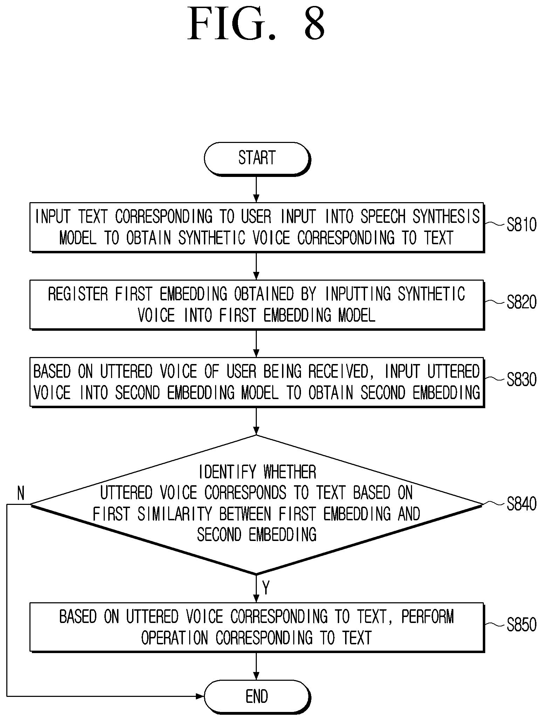

FIG. 8 is a flowchart provided to explain a method of controlling an electronic apparatus according to an embodiment.

In the control method of the electronic apparatus according to an embodiment, text corresponding to a user input is input into a speech synthesis model to obtain a synthetic voice corresponding to the text (S810).

The obtained synthetic voice is input into a first embedding model to register a first embedding (S820).

When a user's uttered voice is received, the uttered voice is input into a second embedding model to obtain a second embedding (S830).

Whether the uttered voice corresponds to the text is identified based on a first similarity between the first embedding and the second embedding (S840).

When the uttered voice corresponds to the text, an operation corresponding to the text is performed (S850).

The control method according to an embodiment may further include obtaining characteristic information related to the synthetic voice by inputting the text into the speech synthesis model, and the registering of the first embedding in operation S820 may include obtaining the first embedding by inputting the synthetic voice and the characteristic information into the first embedding model, and the characteristic information may include length information of the synthetic voice and prosody information of the synthetic voice.

The control method according to an embodiment may further include obtaining a plurality of first sample embeddings by inputting a plurality of first sample uttered voices corresponding to the text into the second embedding model, obtaining a plurality of second sample embeddings by inputting a plurality of second sample uttered voices not corresponding to the text into the second embedding model, and training the first embedding model such that similarities between each of the plurality of first sample embeddings and the first embedding are equal to or greater than a threshold value and similarities between each of the plurality of second sample embeddings and the first embedding are less than the threshold value.

The control method according to an embodiment may further include obtaining a third embedding by inputting the text into a third embedding model, and operation S850 of performing the operation may include performing the operation corresponding to the text by identifying that the uttered voice corresponds to the text when at least one of the first similarity between the first embedding and the second embedding or a second similarity between the first embedding and the third embedding is equal to or greater than a threshold value.

The control method according to an embodiment may further include obtaining a plurality of first sample embeddings by inputting a plurality of first sample uttered voices corresponding to the text into the second embedding model, obtaining a plurality of second sample embeddings by inputting a plurality of second training sounds not corresponding to the text into the second embedding model, and training the third embedding model such that similarities between each of the plurality of first sample embeddings and the third embedding are equal to or greater than the threshold value and similarities between each of the plurality of second sample embeddings and the third embedding are less than the threshold value.

The control method according to an embodiment may further include applying the uttered voice to a speech enhancement model to remove noise included in the uttered voice and amplify the uttered voice, and then inputting the uttered voice into the second embedding model to obtain the second embedding.

The control method according to an embodiment may further include training the speech enhancement model based on a plurality of third sample uttered voices and transcript information corresponding to each of the plurality of third sample uttered voices.

In the control method according to an embodiment, the text may be a trigger word for activating a voice recognition mode of the electronic apparatus, and operation S850 of performing the operation may further include, when the first similarity between the first embedding and the second embedding is equal to or greater than a threshold value, identifying that the uttered voice corresponds to the text and activating the voice recognition mode.

The control method according to an embodiment may further include, when the text is changed, obtaining a new synthetic voice corresponding to changed text by inputting the changed text into the speech synthesis model, and registering a new first embedding obtained by inputting the new synthetic voice into the first embedding model.

The speech synthesis model according to an embodiment may be a Text-to-Speech model configured to convert text into a synthetic voice.

However, various embodiments of the present disclosure may be applied to various types of electronic apparatuses.

Meanwhile, various embodiments described above may be implemented in a computer-readable recording medium in a computer or a similar apparatus using software, hardware, or a combination thereof. In some cases, embodiments described herein may be implemented in a processor itself. In a software implementation, embodiments such as procedures and functions described herein may be implemented as separate software modules. Each of the software modules may perform one or more functions and operations described herein.

Meanwhile, computer instructions for performing processing operations of a robot apparatus according to various embodiments of the present disclosure may be stored in a non-transitory computer-readable medium. When executed by a processor of a specific apparatus, the computer instructions stored in the non-transitory computer-readable medium cause the specific apparatus to perform the processing operations in the electronic apparatus according to the various embodiments described above.

A non-transitory computer-readable medium refers to a medium that stores data semi-permanently and is readable by an apparatus, rather than a medium that stores data for a short moment such as a register, a cache, or a memory. Specific examples of the non-transitory computer-readable medium may include a compact disc (CD), a digital versatile disc (DVD), a hard disk, a Blu-ray disc, a universal serial bus (USB), a memory card, and a ROM.

Although preferred embodiments of the present disclosure have been shown and described above, the disclosure is not limited to the specific embodiments described above, and various modifications may be made by one of ordinary skill in the art without departing from the gist of the disclosure as claimed in the claims, and such modifications are not to be understood in isolation from the technical ideas or prospect of the disclosure.

## Claims

1. An electronic apparatus comprising:
memory storing at least one instruction; and
one or more processors connected to the memory and configured to control the electronic apparatus,
wherein the one or more processors are configured to:
input text corresponding to a user input into a speech synthesis model to obtain a synthetic voice corresponding to the text;
input the synthetic voice into a first embedding model to obtain a first embedding and store the first embedding in the memory;
based on an uttered voice of a user being received, input the uttered voice into a second embedding model to obtain a second embedding;
identify whether the uttered voice corresponds to the text based on a first similarity between the first embedding and the second embedding; and
based on the uttered voice corresponding to the text, perform an operation corresponding to the text.

2. The electronic apparatus of claim 1, wherein the one or more processors are configured to:
input the text into the speech synthesis model to obtain characteristic information related to the synthetic voice,
input the synthetic voice and the characteristic information into the first embedding model to obtain the first embedding; and
wherein the characteristic information includes length information of the synthetic voice and prosody information of the synthetic voice.

3. The electronic apparatus of claim 1, wherein the one or more processors are configured to:
input a plurality of first sample uttered voices corresponding to the text into the second embedding model to obtain a plurality of first sample embeddings;
input a plurality of second sample uttered voices not corresponding to the text into the second embedding model to obtain a plurality of second sample embeddings; and
train the first embedding model such that similarities between each of the plurality of first sample embeddings and the first embedding are equal to or greater than a threshold value, and similarities between each of the plurality of second sample embeddings and the first embedding are less than the threshold value.

4. The electronic apparatus of claim 1, wherein the one or more processors are configured to:
input the text into a third embedding model to obtain a third embedding; and
based on at least one of the first similarity between the first embedding and the second embedding or a second similarity between the first embedding and the third embedding being equal to or greater than a threshold value, identify that the uttered voice corresponds to the text and perform an operation corresponding to the text.

5. The electronic apparatus of claim 4, wherein the one or more processors are configured to:
input a plurality of first sample uttered voices corresponding to the text into the second embedding model to obtain a plurality of first sample embeddings;
input a plurality of second training sounds not corresponding to the text into the second embedding model to obtain a plurality of second sample embeddings; and
train the third embedding model such that similarities between each of the plurality of first sample embeddings and the third embedding are equal to or greater than the threshold value, and similarities between each of the plurality of second sample embeddings and the third embedding are less than the threshold value.

6. The electronic apparatus of claim 1, wherein the one or more processors are configured to:
apply the uttered voice to a speech enhancement model to remove noise included in the uttered voice and amplify the uttered voice, and input the uttered voice into the second embedding model to obtain the second embedding.

7. The electronic apparatus of claim 6, wherein the one or more processors are configured to:
train the speech enhancement model based on a plurality of third sample uttered voices and transcript information corresponding to each of the plurality of third sample uttered voices.

8. The electronic apparatus of claim 1, wherein the text is a trigger word for activating a voice recognition mode of the electronic apparatus; and
wherein the one or more processors are configured to:
based on the first similarity between the first embedding and the second embedding being equal to or greater than a threshold value, identify that the uttered voice corresponds to the text and activate the voice recognition mode.

9. The electronic apparatus of claim 1, wherein the one or more processors are configured to:
based on the text is changed, input the changed text into the speech synthesis model to obtain a new synthetic voice corresponding to the changed text; and
input the new synthetic voice into the first embedding model to obtain and store a new first embedding.

10. The electronic apparatus of claim 1, wherein the speech synthesis model is a text-to-speech (TTS) model configured to convert the text into the synthetic voice.

11. A method of controlling an electronic apparatus, comprising:
inputting text corresponding to a user input into a speech synthesis model to obtain a synthetic voice corresponding to the text;
registering a first embedding obtained by inputting the synthetic voice into a first embedding model;
based on an uttered voice of a user being received, inputting the uttered voice into a second embedding model to obtain a second embedding;
identifying whether the uttered voice corresponds to the text based on a first similarity between the first embedding and the second embedding; and
based on the uttered voice corresponding to the text, performing an operation corresponding to the text.

12. The method of claim 11, further comprising:
inputting the text into the speech synthesis model to obtain characteristic information related to the synthetic voice,
wherein the registering a first embedding comprises:
inputting the synthetic voice and the characteristic information into the first embedding model to obtain the first embedding; and
wherein the characteristic information includes length information of the synthetic voice and prosody information of the synthetic voice.

13. The method of claim 12, further comprising:
inputting a plurality of first sample uttered voices corresponding to the text into the second embedding model to obtain a plurality of first sample embeddings;
inputting a plurality of second sample uttered voices not corresponding to the text into the second embedding model to obtain a plurality of second sample embeddings; and
training the first embedding model such that similarities between each of the plurality of first sample embeddings and the first embedding are equal to or greater than a threshold value, and similarities between each of the plurality of second sample embeddings and the first embedding are less than the threshold value.

14. The method of claim 11, further comprising:
inputting the text into a third embedding model to obtain a third embedding; and
wherein the performing an operation comprises:
based on at least one of the first similarity between the first embedding and the second embedding or a second similarity between the first embedding and the third embedding being equal to or greater than a threshold value, identifying that the uttered voice corresponds to the text and performing an operation corresponding to the text.

15. The method of claim 14, further comprising:
Inputting a plurality of first sample uttered voices corresponding to the text into the second embedding model to obtain a plurality of first sample embeddings;
Inputting a plurality of second training sounds not corresponding to the text into the second embedding model to obtain a plurality of second sample embeddings; and
training the third embedding model such that similarities between each of the plurality of first sample embeddings and the third embedding are equal to or greater than the threshold value, and similarities between each of the plurality of second sample embeddings and the third embedding are less than the threshold value.
